(19) Europäisches Patentamt
European Patent Office
Office européen des brevets

(11) **EP 4 540 057 B1**

(12) **EUROPEAN PATENT SPECIFICATION**

(45) Date of publication and mention of the grant of the patent:
**15.04.2026 Bulletin 2026/16**

(21) Application number: **23736474.0**

(22) Date of filing: **15.06.2023**

(51) International Patent Classification (IPC):
***B32B 15/08*** *(2006.01)* ***F16D 65/00*** *(2006.01)*

(52) Cooperative Patent Classification (CPC):
**F16D 65/0006; B32B 7/12; F16D 65/0971;**
B32B 2255/06; B32B 2255/26; B32B 2255/28;
B32B 2307/102; B32B 2605/00

(86) International application number:
**PCT/IB2023/056208**

(87) International publication number:
**WO 2023/242795 (21.12.2023 Gazette 2023/51)**

(54) **ORGANO-TITANATES AS ADHESION PROMOTER FOR ANTI-NOISE SHIM ON BRAKE PADS, ASSOCIATED BRAKE PAD AND METHOD**

ORGANISCHE TITANATE ALS HAFTVERMITTLER FÜR LÄRMSCHUTZSCHEIBEN AUF BREMSBELÄGEN, ZUGEHÖRIGER BREMSBELAG UND VERFAHREN

TITANATES ORGANIQUES EN TANT QUE PROMOTEURS D’ADHÉRENCE POUR DISQUES ANTIBRUIT SUR GARNITURES DE FREIN, GARNITURE DE FREIN ASSOCIÉE ET PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.06.2022 IT 202200012896**

(43) Date of publication of application:
**23.04.2025 Bulletin 2025/17**

(73) Proprietor: **ITT Italia S.r.l.**
**20045 Lainate (MI) (IT)**

(72) Inventors:
- **POLLIOTTO, Valeria**
  **12032 BARGE (CN) (IT)**
- **GALIMBERTI, Paolo**
  **12032 BARGE (CN) (IT)**

(74) Representative: **Studio Torta S.p.A.**
**Via Viotti, 9**
**10121 Torino (IT)**

(56) References cited:
**EP-A2- 0 347 049**
**WO-A1-2016/080537**
**JP-A- 2006 125 418**
**KR-B1- 101 947 558**
**US-A1- 2016 102 415**
**US-A1- 2021 189 206**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 540 057 B1

## Description

Cross-Reference to Related Applications

This Patent Application claims priority from Italian Patent Application No. 102022000012896 filed on June 17, 2022.

Technical Field

The present invention relates to the use of specifically selected primer compounds to promote adhesion between an anti-noise sheet element, known as "shim", and a first face of a metallic support, which bears on a second face thereof, opposite the first face, a friction material block or pad, the metallic support forming with the friction material block and the shim a vehicle braking element, like brake shoes or brake pads, in particular brake pads.

The invention further relates to an associated method for anchoring in a secure and substantially permanent manner a covering flat element, in particular an anti-noise sheet element or shim, to a metallic surface of a support, in particular when the metallic surface is painted with an organic resin, e.g. an epoxy resin.

The present invention further relates also to an associated braking element for a vehicle provided with an anti-noise element or shim having improved adhesion.

Prior Art

The braking elements generally used in modern vehicles consist in brake pads comprising a friction material block and a support therefor, the support consisting in a metallic plate delimited by a first and a second opposite faces.

The first face is generally provided with a sheet element or foil called "shim" which covers a large part, or the whole, first face, while the second face bears a friction material block bonded thereto, e.g. by gluing or other methods.

In use, a direct or indirect thrust is exerted against the first face for pressing the friction material block carried by the second face against an element to be braked, e.g. a vehicle brake disc.

Since during this operation noises and vibrations may be produced due to the thrust exerted against the metallic surface of the first face of the support, also known as "backplate", the first face is provided with the anti-noise element called shim, which is designed with elastomeric properties in order to adsorb or at least reduce such noises and vibrations. Such a shim-backplate arrangement is shown in prior art document KR 101 947 558 B1.

There is therefore the problem to ensure a secure attachment of the anti-noise shim to the first face of the support, in order to avoid accidental detachments in use.

Unfortunately, nowadays, the brake pads (both friction material block and metallic backplate) are to be coated with a protective paint, generally an epoxy resin, so that anchoring in a secure manner the shim to the coated (painted) metallic surface of the backplate may be problematic.

Generally, the anti-noise shims usually applied onto the backplate are bonded thereto using an acrylic resin as adhesive.

However, also due to the presence of the epoxy coating there may be a low adherence between the shim and the backplate, coated with the epoxy resin, with subsequent risk of detachment in use of the shim, due to the mechanical stresses to which it is normally subjected.

In fact, the reduced presence of polar groups on the metallic support surface makes its surface tension low and therefore the ability of the anti-noise shim acrylic adhesive to adhere thereto also low. The low interaction between the metallic surface and the adhesive leads to an easily detachment of the anti-noise element (shim) from the backplate.

To solve this problem, a flaming treatment of the surface designed to receive the anti-noise shim has been used up to now. This treatment is in fact known to be able to polarize the surface through the formation of functional groups such as -OH, -COOH.

However, it would be preferable to avoid this treatment because it is in some cases low performing (so it does not solve the problem of the risk of detachment of the shim) and is dangerous, troublesome and expensive to be carried out.

In order to avoid the aforementioned drawback, the backplate may be provided with mechanical attachment points for the anti-noise shim, as schematically illustrated in figure 1.

The backplate A is provided on its metallic surface S facing the shim SH with pins P provided integral in one piece with the backplate A and arranged within shallow recesses R created on the metallic surface S. The shim SH is as well provided with hollow bulged sections B which couple mechanically with the pins P.

It is clear, however, that such a solution is complex and expensive to be implemented.

Summary of the Invention

It is an object of the present invention to provide a method for anchoring a covering sheet element like an anti-noise shim to a surface of a metallic support for a braking element, like the backplate of a vehicle brake pad , free from the drawbacks of the prior art and in particular which is reliable and easy and inexpensive to be implemented.

It is a further object of the present invention to provide a braking element, in particular a brake pad, comprising a support for a friction material block and an anti-noise shim applied to the support on the side opposite the friction material block, wherein the shim is bonded to the support in a secure and simple manner.

According to the present invention a method for anchoring a covering sheet element like an anti-noise shim to a surface of a metallic support for a braking element, like the backplate of a vehicle brake pad, and the associated braking element, are therefore provided as defined in the appended claims.

The invention also relates to the use of specifically selected chemical compounds as primers for promoting the chemical adhesion of a covering sheet element, like an anti-noise shim, to a metallic surface of a support, in particular to the face of a metallic backplate of a brake pad opposite to the friction material block thereof.

According to embodiments of the present invention, a covering sheet element, preferably consisting in an anti-noise shim of any type known in the art, is anchored/bonded to a surface of a metallic support for a braking element, e.g. a backplate, by a method including gluing the covering sheet element to such a surface and the step of pre-treating the surface before the gluing step; wherein the step of pre-treating the surface consists in applying to it a primer compound consisting in an organo-titanate diluted in an organic solvent.

In preferred embodiments the organo-titanate is a tetra-alkoxy titanium (IV) represented by the general formula

[1] $Ti(OR)_4$

, wherein R is all the same or different and may be chosen from the group consisting in: unsubstituted alchilic groups, either with single or branched chains; substituted alchilic groups, either with single or branched chains, wherein substituents are chosen in the group consisting in: amino, phosphilic, ether, unsaturated hydrocarbon groups.

In preferred embodiments the organic solvent is an alcoholic polar solvent.

The alcoholic polar solvent may be chosen from the group consisting in: isopropyl alcohol, ethanol, acetone, mixtures thereof.

In a most preferred embodiment the polar alcoholic solvent is isopropyl alcohol.

In embodiments of the method of the present disclosure the following steps are carried out on the surface of the metallic support designed to receive the covering sheet element, namely the anti-noise shim:

a) painting the surface with an epoxy resin;
b) applying on such surface already painted with the epoxy resin the organo-titanate in an organic solvent to form on the surface and above the epoxy resin an even layer of organo-titanate in solution;
c) gluing the covering sheet element to the surface already painted and pre-treated with the organo-titanate diluted in an organic solvent by applying between the covering sheet element and the even layer of organo-titanate in solution an acrylic glue or an adhesive based on an acrylic resin.

In preferred embodiments the covering sheet element consists in an anti-noise shim and the metallic support consists in a backplate of a vehicle brake pad, the aforementioned surface delimiting a first face of the backplate opposite to a second face thereof carrying a friction material block-

In preferred embodiments the organo-titanate is diluted in an alcoholic polar solvent with a dilution from 0.5% to 5% v/v (volume on volume).

In preferred embodiments the organo-titanate diluted in an organic solvent is applied to the aforementioned surface with a technique chosen in the group consisting in:

- by spraying the organo-titanate solution,
- by means of a roller coated with the organo-titanate solution,
- by dropping unevenly the organo-titanate solution on the surface and then distributing it evenly by a cloth or a cloth covered applicator, e.g. a rotating disc.

Embodiments of the present invention consist in a braking element, in particular a brake pad, comprising a support for a friction material block and an anti-noise shim applied to the support on the side opposite the friction material block, wherein the shim is bonded to a first face of the support opposite to the friction material block; wherein:

i)- the first face of the support is painted with a first layer of an epoxy resin;

ii)- onto the first layer of epoxy resin is spread a second layer of an organo-titanate, the organo-titanate comprising alkoxy groups;

iii)- the shim is bonded to the first face by means of a third layer of an acrylic resin resting upon the second layer of organo-titanate;

iv)- wherein at least part of the respective alkoxy groups having been hydrolyzed by both the acrylic resin and the epoxy resin forming a chemical bond between the first and the third layer.

In preferred embodiments of the braking element according to the invention the organo-titanate forming the second layer is a tetra-alkoxy titanium (IV) represented by the general formula $Ti(OR)_4$, wherein R is all the same or different and is preferably chosen from the group consisting in: unsubstituted alchilic groups, either with single or branched chains; substituted alchilic groups, either with single or branched chains, wherein substituents are chosen in the group consisting in: amino, phosphilic, ether, unsaturated hydrocarbon groups.

Embodiments of the present invention consist in the use of a primer compound for promoting adhesion of an anti-noise sheet element or shim to a surface of a metallic support of a braking element, in particular a backplate of a vehicle brake pad, wherein:

- the surface is painted with an epoxy resin,
- the anti-noise shim is glued to said surface by means of an acrylic glue or an adhesive based on an acrylic resin,
- the primer compound is spread onto the epoxy resin paint covering the surface so as to be interposed between the epoxy resin and the acrylic resin glue or adhesive,
- the primer compound consists in an organo-titanate diluted in an organic solvent, preferably an alcoholic polar solvent,
- the organo-titanate is a tetra-alkoxy titanium (IV) represented by the general formula $Ti(OR)_4$, wherein R is all the same or different and is preferably chosen from the group consisting in: unsubstituted alchilic groups, either with single or branched chains; substituted alchilic groups, either with single or branched chains, wherein substituents are chosen in the group consisting in: amino, phosphilic, ether, unsaturated hydrocarbon groups.

In preferred embodiment of the use according to the invention the organo-titanate is diluted in an alcoholic polar solvent with a dilution from 0.5% to 5% v/v, then is applied to the painted surface of the metallic support and is left to dry at room temperature.

## Brief Description of Drawings

Preferred but not limiting embodiments of the invention will be now described in more detail with reference to a number of practical working examples of implementation thereof which are solely intended to disclose in a non-exhaustive and not limiting manner the feature which are part of the content of the present disclosure, and with reference to the figures of the attached drawings, in which:

- Figure 1 shows in a schematic way a solution of the prior art to ensure a mechanical connection between an anti-noise shim and a corresponding mating face of a backplate for a brake pad, the whole brake pad being not shown for sake of simplicity;
- Figure 2 shows in an enlarged scale a schematic cross-section view of a metal support of a brake pad made according to the invention and provided with an anti-noise shim bonded to the support according to the method of the invention;
- Figures 3 and 4 illustrate in a schematic manner the execution of two different tests for checking the efficacy of the bonding between a metal support and a known anti-noise shim;
- Figures 5 and 6 show, respectively, a plan view and a cross-section view taken along a section plane VI-VI of a braking element, namely a brake pad, according to the present invention; and
- Figure 7 shows a simplified block diagram illustrating the sequence of steps of the method of the invention.

## Detailed Description

With reference to figures 2, 5, 6 and 7, the reference number 1 indicates as a whole (figure 5) a braking element for a vehicle, in the non-limitative embodiment shown consisting in a brake pad of any shape, illustrated only schematically and out of scale, for exemplificative purposes only.

The braking element 1 comprises a metal support 2, also known as "backplate", consisting of a flat metal plate delimited between two opposite, substantially planar, faces, namely a first face 3 and a second face 4, substantially parallel to face 3.

The braking element 1 further comprises a friction material block (or pad) 5, known in the art and bonded in any suitable manner to the second face 4, designed to face in use an element to be braked, e.g. a brake disc (not shown for sake

of simplicity) and a well-known anti-noise element 6 carried by the first face 3 and covering the whole or at least part of the latter.

The anti-noise element 6, normally referred to as "shim", is secured in a stable manner to face 3, so that the anti-noise shim 6 is applied to the support 2 on the side opposite the friction material block 5.

According to a fist aspect of the invention, and with reference to figure 2, which represents in a fair enlarged scale the same cross-section of figure 6, but limited to backplate 2 and anti-noise shim 6, the anti-noise shim 6 is secured to a metallic surface 7 of the first face 3 by bonding, specifically by means of a layer 8 (figure 2) of known adhesive or glue, so that the shim 6 is bonded to the first face 3 of the support 2 opposite to the friction material block 5.

In a preferred embodiment of the invention the adhesive or glue forming the layer 8 is an acrylic adhesive or glue, e.g. of any commercial type.

In a preferred embodiment of the invention, the first face 3 of the support 2 is painted with a first layer 9 of synthetic paint (figure 2).

In a preferred embodiment, the layer 9 is formed by an epoxy resin paint, e.g. of any commercial type.

According to a main aspect of the invention, in order to promote secure adhesion between the anti-noise shim 6 and the metallic surface 7 of the first face 3 of the metallic support 2, onto the first layer of epoxy resin 9 is spread a second layer 10 of an organo-titanate.

According to an aspect of the invention, the organo-titanate 10 (i.e. forming the layer 10) comprises alkoxy groups.

In this manner, the anti-noise shim 6 is bonded to the first face 3 by means of a third layer 8 of an acrylic resin resting upon the second layer 10 of organo-titanate, which, in the preferred embodiment shown, rests upon the epoxy resin layer 9 of synthetic paint.

This specifically selected sequence of specifically selected materials surprisingly may avoid, as has been experimentally ascertained by the technical people of the Applicant, the accidental detachment in use of the anti-noise shim 6 from the backplate 2, since the organo-titanate forming the layer 10 work as a primer promoting adhesion.

In fact, at least part of the respective alkoxy groups of the organo-titanate 10 may be hydrolyzed by both the acrylic resin 8 and the epoxy resin 9, forming a chemical bond 11 (figure 2) between the first layer 9 and the third layer 8.

It is to be noted that the presence of the epoxy resin layer 9 may not be strictly necessary, even if strongly preferred.

According to preferred embodiments of the invention, the organo-titanate 10 forming the second layer is a tetra-alkoxy titanium (IV) represented by the general formula:

[1] $Ti(OR)_4$

, wherein R is all the same or different, on the basis of the surface chemistry of the subtracts 8, 9.
R usually are alchilic group, with single or branched chain, but can also have amino, phosphilic, ether or unsaturation parts.

Accordingly, R in formula [1] are preferably chosen from the group consisting in:

- unsubstituted alchilic groups, either with single or branched chains;
- substituted alchilic groups, either with single or branched chains,
- wherein substituents are chosen in the group consisting in: amino, phosphilic, ether, unsaturated hydrocarbon groups.

Preferred but not limiting examples of organo-titanates suitable to act as primers according to the invention are chosen from commercially available organo-titanates, usually employed for completely different purpose (e.g. as catalyst):

- Tyzor® TnBT - Tetra-n-butyl titanate

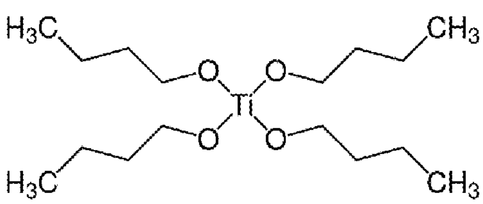

- Tyzor® BTP - a polymeric butyl titanate

- Tyzor® TPT - (tetra-isopropyl titanate)

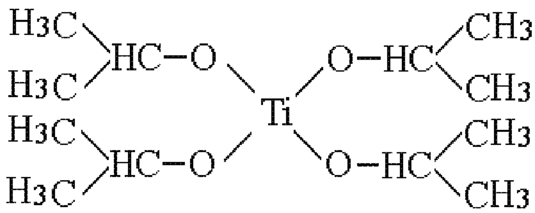

- Tyzor® TOT - tetra-2-ethylhexyl titanate

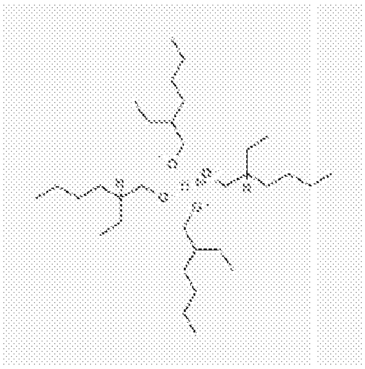

- Tyzor® TE - triethanolamine titanate

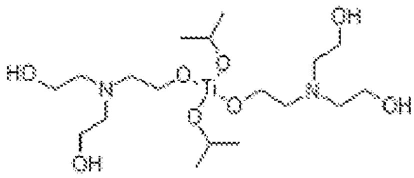

- Ken-React® KR® 44 - Isopropyl, tri (N-ethylenediamino)ethyl titanate

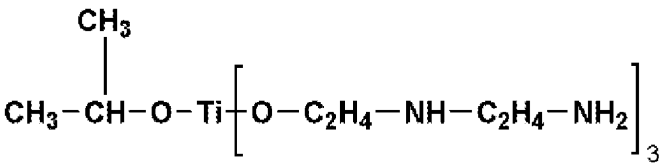

- Ken-React® KR® TTS - Isopropyl, triisostearoyl titanate

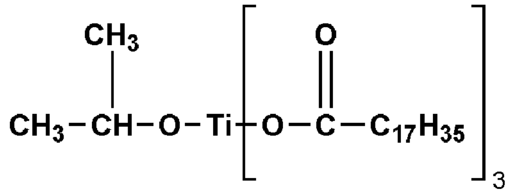

- Ken-React® KR® 138S - Titanium di(dioctylpyrophosphate) oxyacetate

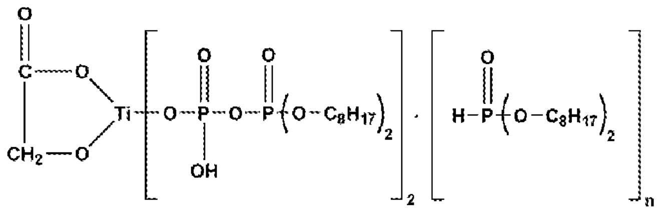

- Ken-React® KR® 55 - Tetra (2,2 diallyloxymethyl)butyl, di(ditridecyl)-phosphito titanate

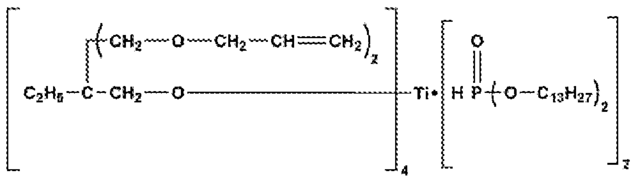

On the basis of what described above, it is evident that the present invention also extends to a method for anchoring a (any) covering sheet element 6, in the case in point an anti-noise shim, to a surface 7 of a metallic support 2 for a braking element 1 by gluing the covering sheet element 6 to such surface 7, comprising the step of pre-treating such surface 7 before the gluing step; wherein:

i. the step of pre-treating such surface 7 consists in applying to surface 7 a primer compound;
ii. the primer compound consists in an organo-titanate 10 diluted for easier application in an organic solvent.

The organo-titanate is a tetra-alkoxy titanium (IV) represented by the general formula [1] referred to above, wherein R is all the same or different and represented by one of the alchilic groups referred to above.
In preferred embodiments, the organic solvent is an alcoholic polar solvent.
In preferred embodiments, the alcoholic polar solvent is chosen from the group consisting in: isopropyl alcohol, ethanol, acetone, mixtures thereof.
With reference to figure 7, the method of the invention preferably comprises the steps as follows:

a) a first step 100 of painting the surface 7 with an epoxy resin 9;
b) a second step 200 of applying on the surface 7 already painted with the epoxy resin 9 a selected organo-titanate diluted in an organic solvent to form on the surface 7 and above the epoxy resin 9 an even layer 10 of organo-titanate in solution, then leaving the layer 10 to dry;
c) a third step 300 of gluing the covering sheet element 6 to the surface 7 already painted and pre-treated with the organo-titanate 10 diluted in an organic solvent by applying between the covering sheet element 6 and the even layer 10 of organo-titanate an acrylic glue or an adhesive 8 based on an acrylic resin.

The organo-titanate 10 may be diluted in an alcoholic polar solvent with a dilution from 0.5% to 5% v/v.
The organo-titanate 10 diluted in an organic solvent may be applied to the surface 7 with a technique chosen in the group consisting in:

- by spraying the organo-titanate 10 solution,

- by means of a roller (known and not shown for sake of simplicity) coated with the organo-titanate 10 solution,
- by dropping unevenly the organo-titanate 10 solution on the surface 7 and then distributing it evenly by a cloth or a cloth covered applicator of any type, e.g. a rotating disc.

It is also evident that the present invention extents to a method for producing a braking element 1 including a support 2, a friction material block 5 bonded to the support 2 and an anti-noise element 6 also bonded to the support 2 on the side opposite to the friction material block 5, comprising all the steps 100-300 as described above plus a step 400 (figure 7) of molding onto the support 2 the friction material block 5.

Of course, the step 400, though being represented in figure 7 in a sequence following the step 300 for illustrative purposes only, is normally carried out before the step 100, i.e. upstream step 100, so that also the friction material block 5 is totally or partially painted by the epoxy resin 9. Steps 100-300 are on the contrary carried out in the same sequence as illustrate in figure 7.

It is finally clear that the present invention also extends to the use of a primer compound for promoting adhesion of an anti-noise sheet element or shim 6 to a surface 7 of a metallic support 2 of a braking element 1, in the preferred embodiment shown a backplate 2 of a vehicle brake pad 1, wherein:

- the surface 7 may be painted with an epoxy resin 9,
- the anti-noise shim 6 may be glued to the surface 7 by means of an acrylic glue 8 or an adhesive 8 based on an acrylic resin,
- the primer compound is spread onto the epoxy resin paint 9 covering the surface 7 so as to be interposed between the epoxy resin 9 and the acrylic resin glue or adhesive 8;
- the primer compound consists in an organo-titanate 10 diluted in an organic solvent, preferably an alcoholic polar solvent which may be spread to form an even layer 10;
- the organo-titanate is a tetra-alkoxy titanium (IV) represented by the general formula $Ti(OR)_4$, wherein R is as defined previously.

In a preferred embodiment of the use according to the invention, the organo-titanate is diluted in an alcoholic polar solvent with a dilution from 0.5% to 5% v/v, then is applied to the surface 7 and is left to dry at room temperature before gluing the shim 6.

The present invention will be now further described with reference to the following practical working examples which also made a clear evidence of its efficacy, demonstrating that the invention effectively works.

EXAMPLE 1

An organo-titanate consisting in Tetra-n-butyl titanate is diluted in isopropyl alcohol, with a dilution of 1% v/v ad applied on a surface of a commercial backplate designed to receive in use an anti-noise shim.

The backplate is painted with a commercial epoxy resin paint.

The organo-titanate is applied pouring four drops of the organo-titanate alcoholic solution on the interested surface and then spread onto the whole surface manually with a cloth.

The applied organo-titanate alcoholic solution is left to dry at room temperature for few (less than ten) seconds.

Thereafter, a commercial anti-noise shim, pre-glued with a commercial acrylic adhesive, is applied to the organo-titanate treated surface on the side of its pre-glued face for a pressing time of 1-5 second and with a pressing force comprised between 1000 and 2000 Kg.

Thereafter, adherence has been measured by lap shear strength and pull-off tests, comparing the results with the same tests applied to an identical backplate which has received an identical pre-glued shim but without the pretreatment of the receiving surface of the backplate with the organo-titanate.

EXAMPLE 2 - Pull-off Test

The test is carried out as shown in figure 3. The shim 6 has been attached on the surface 7 of backplates 2 both bare (surface 7 without an organo-titanate layer 10) and pretreated with the organo-titanate primer 10. After 24 hours a part of the shim 6 has been folded at 90° as shown in figure 3.

The adherence of the shim 6 on the backplate 2 (pre-treated and not)is measured pulling the anti-noise shim 6 in a direction perpendicular to the surface 7 of the backplate 2 with a force $F_A$. The resulting forces are calculated in N/mm with the following formula:

$$[2] \qquad pA = F_A/l$$

where pA is the pull-off force and l is the width of the shim 6.

The results are reported in the following Table 1.

TABLE 1

| | NO PRIMER | WITH PRIMER |
|---|---|---|
| 1 | 1.37 | 4.93 |
| 2 | 1.48 | 5.75 |
| 3 | 1.41 | 6.23 |
| 4 | 0.98 | 4.95 |
| 5 | 1.30 | 5.35 |
| 6 | 1.35 | 5.15 |

EXAMPLE 3 - Lap Shear Test

The test is carried out as shown in figure 4. The shim 6 has been attached on the surface 7 of back-plates 2 both bare (surface 7 without an organo-titanate layer 10) and pretreated with the organo-titanate primer 10, as in Example 2. After 24 hours, the anti-noise shim 6 is subjected to a shearing stress pA by applying an axially force $F_A$ to the backplate 2 in a direction parallel to the surface 7. The resulting forces are calculated in N/cm$^2$ with the following formula:

$$[3] \qquad pA = F_A/l*m$$

where pA is the Lap-shear force, l is the width of the shim 6 and m is the length of shim 6 glued to the backplate.

The results are reported in the following Table 2.

TABLE 2

| | NO PRIMER | WITH PRIMER |
|---|---|---|
| 1 | 22.33 | 100.56 |
| 2 | 28.37 | 121.32 |
| 3 | 22.96 | 126.09 |
| 4 | 28.11 | 114.16 |
| 5 | 33.17 | 120.84 |

EXAMPLE 4 - T-PULL test vs. amount of primer

The shim 6 has been attached on a backplate surface 7 pretreated with an organo-titanate primer consisting in a commercial Tetra-n-butyl titanate (Tyzor-TnBT) at different concentration in isopropyl alcool: 0.5% ,1%, 5% and 10 v/v. After 24 hours a part of the shim 6 has been folded at 90°.

The adherence of the shim 6 on the backplate 2 is measured pulling the anti-noise shim 6 in a perpendicular direction to the backplate surface 7, as described in Example 2. The resulting forces are calculated with formula [2] and reported in the following Table 3.

TABLE 3

| | NO PRIMER | 0.5% primer | 1% primer | 5% primer | 10% primer |
|---|---|---|---|---|---|
| | N/mm | N/mm | N/mm | N/mm | N/mm |
| 1 | 1.37 | 3.33 | 4.93 | 4.37 | 2.21 |
| 2 | 1.48 | 2.7 | 5.75 | 4.45 | 2.27 |
| 3 | 1.41 | 2.23 | 6.23 | 4.46 | 3.45 |
| 4 | 0.98 | 1.69 | 4.95 | 2.63 | 2.74 |
| 5 | 1.30 | 2.35 | 5.35 | 2.62 | 1.89 |
| 6 | 1.35 | 3.19 | 5.15 | 3.08 | 2.23 |

It can be noticed that the use of organo-titanate primers increases the adhesion of the shim 6 in all concentrations. However, the best performance is reached at the concentration of 1%. Dilution of 0.5, 5 and 10% v/v indeed show applied forces lower than that obtained with primer diluted at 1% v/v.

Conclusions

The use of the organo-titanate primers provides a chemical bridge between the sub-layer and the adhesive shim in such a way that the traditional flaming treatment of the epoxy paint can be eliminated.
Another advantage in using the method of the invention is the reduction of the risks and of the cost of the anti-noise shim application, because of the low amount required of organo-titanate.
The alkoxy groups of the selected organo-titanates have in fact shown to be easily hydrolyzed by some groups present on the surface of the epoxy and acrylic resins. In that way, the connection sites between the two resins are increased and thus a hard-wearing bridge between them is formed.
The advantages of this solution are:

1) To avoid the flaming treatment.
2) Increasing of the adherence of the shim in time through chemical bond with both epoxy resin of the backplate and the acrylic resin of the anti-noise shim.
3) Reduction of the risks and the cost of the anti-noise shim application.

All the aims of the present disclosure are therefore fulfilled.

Certain Terminology

Although certain braking devices, systems, and methods have been disclosed in the context of certain example embodiments, it will be understood by those skilled in the art that the scope of this disclosure extends beyond the specifically disclosed embodiments to other alternative embodiments and/or uses of the embodiments and certain modifications and equivalents thereof, like brake shows for braking systems based on brake drums. Use with any structure is expressly within the scope of this invention. Various features and aspects of the disclosed embodiments can be combined with or substituted for one another in order to form varying modes of the assembly. The scope of this disclosure should not be limited by the particular disclosed embodiments described herein.
Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.
Unless stated otherwise, the terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. Likewise, the term "generally" as used herein represents a

value, amount, or characteristic that predominantly includes or tends toward a particular value, amount, or characteristic.

This disclosure expressly contemplates that various features and aspects of the disclosed embodiments can be combined with, or substituted for, one another. Accordingly, the scope of this disclosure should not be limited by the particular disclosed embodiments described above, but should be determined only by a fair reading of the claims that follow.

## Claims

1. A method for anchoring a covering sheet element (6) to a surface (7) of a metallic support (2) for a braking element (1) by gluing the covering sheet element to said surface, comprising the step of pre-treating said surface (7) before the gluing step; wherein

   i. the step of pre-treating said surface (7) consists in applying to said surface a primer compound;
   **characterised in that**
   ii. the primer compound consisting in an organo-titanate (10) diluted in an organic solvent.

2. The method of claim 1, **characterized in that** the organo-titanate (10) is a tetra-alkoxy titanium (IV) represented by the general formula $Ti(OR)_4$, wherein R is all the same or different and is preferably chosen from the group consisting in: unsubstituted alchilic groups, either with single or branched chains; substituted alchilic groups, either with single or branched chains, wherein substituents are chosen in the group consisting in: amino, phosphilic, ether, unsaturated hydrocarbon groups.

3. The method of claim 1 or 2, **characterized in that** the organic solvent is an alcoholic polar solvent.

4. The method of claim 3, **characterized in that** the alcoholic polar solvent is chosen from the group consisting in: isopropyl alcohol, ethanol, acetone, mixtures thereof.

5. The method according to anyone of the preceding claims, **characterized in** comprising the steps as follows:

   a) painting (100) said surface with an epoxy resin (9);
   b) applying (200) on said surface (7) already painted with the epoxy resin (9) said organo-titanate (10) in an organic solvent to form on said surface and above said epoxy resin an even layer of organo-titanate (10) in solution;
   c) gluing (300) said covering sheet element (6) to said surface (7) already painted and pre-treated with said organo-titanate (10) diluted in an organic solvent by applying between the covering sheet element (6) and said even layer of organo-titanate (10) in solution an acrylic glue or an adhesive based on an acrylic resin (8).

6. The method according to anyone of the preceding claims, **characterized in that** said covering sheet element consists in an anti-noise shim (6) and **in that** the said metallic support consists in a backplate (2) of a vehicle brake pad (1), said surface (7) delimiting a first face (3) of the backplate (2) opposite to a second face (4) thereof carrying a friction material block (5); said organo-titanate (10) being diluted in an alcoholic polar solvent with a dilution from 0.5% to 5% v/v.

7. The method according to anyone of the preceding claims, **characterized in that** said organo-titanate (10) diluted in an organic solvent is applied to said surface (7) with a technique chosen in the group consisting in:

   - by spraying the organo-titanate solution,
   - by means of a roller coated with the organo-titanate solution,
   - by dropping unevenly the organo-titanate solution on said surface and then distributing it evenly by a cloth or a cloth covered applicator.

8. A braking element (1), in particular a brake pad, comprising a support (2) for a friction material block (5) and an anti-noise shim (6) applied to the support on the side opposite the friction material block, wherein the shim (6) is bonded to a first face (3) of the support opposite to said friction material block, **characterized in that,** in combination:

   i)- said first face (3) of the support is painted with a first layer of an epoxy resin (9);
   ii)- onto said first layer of epoxy resin (9) is spread a second layer of an organo-titanate (10), the organo-titanate comprising alkoxy groups;

iii)- the shim (6) is bonded to said first face (3) by means of a third layer of an acrylic resin (8) resting upon the second layer of organo-titanate (10);

iv)- wherein at least part of the respective alkoxy groups having been hydrolyzed by both the acrylic resin and the epoxy resin (9, 8) forming a chemical bond (11) between the first and the third layer.

**9.** The braking element of claim 8, **characterized in that** the organo-titanate (10) forming the second layer is a tetra-alkoxy titanium (IV) represented by the general formula $Ti(OR)_4$, wherein R is all the same or different and is preferably chosen from the group consisting in: unsubstituted alchilic groups, either with single or branched chains; substituted alchilic groups, either with single or branched chains, wherein substituents are chosen in the group consisting in: amino, phosphilic, ether, unsaturated hydrocarbon groups.

**10.** Use of a primer compound for promoting adhesion of an anti-noise sheet element (6) or shim to a surface (7) of a metallic support (2) of a braking element (1), in particular a backplate of a vehicle brake pad, wherein:

- said surface (7) is painted with an epoxy resin (9),
- said anti-noise shim (6) is glued to said surface by means of an acrylic glue or an adhesive based on an acrylic resin (8),

**characterized in that**

i)- the primer compound is spread onto the epoxy resin paint layer (10) covering said surface (7) so as to be interposed between the epoxy resin (9) and the acrylic resin glue or adhesive (8);

ii)- the primer compound consists in an organo-titanate (10) diluted in an organic solvent, preferably an alcoholic polar solvent;

iii)- the organo-titanate (10) is a tetra-alkoxy titanium (IV) represented by the general formula $Ti(OR)_4$, wherein R is all the same or different and is preferably chosen from the group consisting in: unsubstituted alchilic groups, either with single or branched chains; substituted alchilic groups, either with single or branched chains, wherein substituents are chosen in the group consisting in: amino, phosphilic, ether, unsaturated hydrocarbon groups.

**11.** The use according to claim 10, wherein said organo-titanate (10) is diluted in an alcoholic polar solvent with a dilution from 0.5% to 5% v/v, then is applied to said surface (7) and is left to dry at room temperature.

**12.** A method for producing a braking element (1) including a support (2), a friction material block (5) bonded to the support and an anti-noise element (6) also bonded to the support on the side opposite to the friction material block, comprising all the steps of the method of claims from 1 to 7 plus the step (400) of molding onto the support (2) the friction material block (5).

## Patentansprüche

**1.** Verfahren zur Verankerung eines Abdeckplattenelements (6) auf einer Oberfläche (7) eines metallischen Trägers (2) für ein Bremselement (1) durch Aufkleben des Abdeckplattenelements auf diese Oberfläche, umfassend den Schritt der Vorbehandlung dieser Oberfläche (7) vor dem Klebeschritt; wobei:

i. der Schritt der Vorbehandlung der Oberfläche (7) im Aufbringen einer Grundierungsverbindung auf die Oberfläche besteht;

**dadurch gekennzeichnet, dass**

ii. die Grundierungsverbindung aus einem in einem organischen Lösungsmittel verdünnten Organotitanat (10) besteht.

**2.** Verfahren nach Anspruch 1, **dadurch gekennzeichnet, dass** das Organotitanat (10) ein Tetraalkoxytitan (IV) der allgemeinen Formel $Ti(OR)_4$ ist, wobei R gleich oder verschieden ist und vorzugsweise ausgewählt ist aus der Gruppe bestehend aus: unsubstituierten Alkylgruppen, entweder mit einfachen oder verzweigten Ketten; substituierten Alkylgruppen, entweder mit einfachen oder verzweigten Ketten, wobei die Substituenten aus der Gruppe bestehend aus: Amino-, Phosphin-, Ether- und ungesättigten Kohlenwasserstoffgruppen ausgewählt sind.

**3.** Verfahren nach Anspruch 1 oder 2, **dadurch gekennzeichnet, dass** es sich bei dem organischen Lösungsmittel um ein alkoholisches polares Lösungsmittel handelt.

**4.** Verfahren nach Anspruch 3, **dadurch gekennzeichnet, dass** das alkoholische polare Lösungsmittel ausgewählt ist aus der Gruppe bestehend aus: Isopropylalkohol, Ethanol, Aceton, Mischungen davon.

**5.** Verfahren nach einem der vorhergehenden Ansprüche, **dadurch gekennzeichnet, dass** es die folgenden Schritte umfasst:

a) Beschichten (100) der Oberfläche mit einem Epoxidharz (9);
b) Aufbringen (200) des Organotitanats (10) in einem organischen Lösungsmittel auf die bereits mit dem Epoxidharz (9) beschichtete Oberfläche (7), um auf der Oberfläche und über dem Epoxidharz eine gleichmäßige Schicht des gelösten Organotitanats (10) zu bilden;
c) Verkleben (300) des Abdeckplattenelements (6) mit der bereits beschichteten und mit dem in einem organischen Lösungsmittel verdünnten Organotitanat (10) vorbehandelten Oberfläche (7) durch Auftragen eines Acrylklebstoffs oder eines Klebstoffs auf Basis eines Acrylharzes (8) zwischen dem Abdeckplattenelement (6) und der gleichmäßigen Schicht des gelösten Organotitanats (10).

**6.** Verfahren nach einem der vorhergehenden Ansprüche **dadurch gekennzeichnet, dass** das Abdeckplattenelement aus einer Geräuschdämpfungsplatte (6) besteht und dass die metallische Trägerplatte aus einer Trägerplatte (2) eines Fahrzeugbremsbelags (1) besteht, wobei die Oberfläche (7) eine erste Seite (3) der Trägerplatte (2) begrenzt, die einer zweiten Seite (4) abgewandt ist, die einen Reibmaterialblock (5) trägt; wobei das Organotitanat (10) in einem alkoholischen polaren Lösungsmittel mit einer Konzentration von 0,5% bis 5% v/v gelöst ist.

**7.** Verfahren nach einem der vorhergehenden Ansprüche, **dadurch gekennzeichnet, dass** das Organotitanat (10), verdünnt in einem organischen Lösungsmittel, mit einer Technik aus der folgenden Gruppe auf die Oberfläche (7) aufgebracht wird:

- durch Aufsprühen der Organotitanatlösung,
- mittels einer mit der Organotitanatlösung beschichteten Walze,
- indem die Organotitanatlösung ungleichmäßig auf die Oberfläche getropft und anschließend mit einem Tuch oder mit einem mit einem Tuch bedeckten Applikator gleichmäßig verteilt wird.

**8.** Bremselement (1), insbesondere ein Bremsbelag, aufweisend einen Träger (2) für einen Reibmaterialblock (5) und eine Geräuschdämpfungsplatte (6), die auf der dem Reibmaterialblock gegenüberliegenden Seite des Trägers angebracht ist, wobei die Geräuschdämpfungsplatte (6) mit einer ersten Seite (3) des Trägers, die dem Reibmaterialblock gegenüberliegt, verbunden ist, **dadurch gekennzeichnet, dass** in Kombination:

i) die erste Seite (3) des Trägers mit einer ersten Schicht eines Epoxidharzes (9) beschichtet ist;
ii) auf die erste Schicht des Epoxidharzes (9) eine zweite Schicht eines Organotitanats (10) aufgetragen ist, wobei das Organotitanat Alkoxygruppen enthält;
iii) die Geräuschdämpfungsplatte (6) mittels einer dritten Schicht eines Acrylharzes (8), die auf der zweiten Schicht des Organotitanats (10) aufliegt, mit der ersten Seite (3) verbunden ist;
iv) wobei mindestens ein Teil der jeweiligen Alkoxygruppen sowohl durch das Acrylharz als auch durch das Epoxidharz (9, 8) hydrolysiert wurde und eine chemische Bindung (11) zwischen der ersten und der dritten Schicht bildet.

**9.** Bremselement nach Anspruch 8, **dadurch gekennzeichnet, dass** das die zweite Schicht bildende Organotitanat (10) ein Tetraalkoxytitan (IV) der allgemeinen Formel $Ti(OR)_4$ ist, wobei R gleich oder verschieden ist und vorzugsweise ausgewählt ist aus der Gruppe bestehend aus: unsubstituierten Alkylgruppen, entweder mit einfachen oder verzweigten Ketten; substituierten Alkylgruppen, entweder mit einfachen oder verzweigten Ketten, wobei die Substituenten aus der Gruppe bestehend aus: Amino-, Phosphin-, Ether- und ungesättigten Kohlenwasserstoffgruppen ausgewählt sind.

**10.** Verwendung einer Grundierungsmasse zur Förderung der Haftung eines Antigeräuschdämpfungselements (6) oder einer Geräuschdämpfungsplatte auf einer Oberfläche (7) eines metallischen Trägers (2) eines Bremselements (1), insbesondere einer Trägerplatte eines Fahrzeugbremsbelags, wobei:

- die genannte Oberfläche (7) mit einem Epoxidharz (9) beschichtet ist,
- die genannte Geräuschdämpfungsplatte (6) mittels eines Acrylklebers oder eines auf Acrylharz basierenden Klebstoffs (8) auf die Oberfläche geklebt ist,

**dadurch gekennzeichnet, dass**

i) die Grundierung auf die die Oberfläche (7) bedeckende Epoxidharz-Lackschicht (10) aufgetragen wird und sich zwischen dem Epoxidharz (9) und dem Acrylkleber oder Harz (8) befindet;
ii) die Grundierung aus einem Organotitanat (10) besteht, das in einem organischen Lösungsmittel, vorzugsweise einem alkoholischen polaren Lösungsmittel gelöst ist;
iii)- das Organotitanat (10) ein Tetraalkoxytitan (IV) der allgemeinen Formel Ti $(OR)_4$ ist, wobei R gleich oder verschieden ist und vorzugsweise ausgewählt ist aus der Gruppe bestehend aus: unsubstituierten Alkylgruppen, entweder mit einfachen oder verzweigten Ketten; substituierten Alkylgruppen, entweder mit einfachen oder verzweigten Ketten, wobei die Substituenten aus der Gruppe bestehend aus: Amino-, Phosphin-, Ether- und ungesättigten Kohlenwasserstoffgruppen ausgewählt sind.

**11.** Verwendung nach Anspruch 10, wobei das Organotitanat (10) in einem alkoholischen polaren Lösungsmittel mit einer Verdünnung von 0,5% bis 5% v/v verdünnt, dann auf die Oberfläche (7) aufgetragen und bei Raumtemperatur trocknen gelassen wird.

**12.** Verfahren zur Herstellung eines Bremselements (1) mit einem Träger (2), einem an den Träger geklebten Reibmaterialblock (5) und einem ebenfalls an den Träger geklebten Geräuschdämpfungselement (6) auf der dem Reibmaterialblock gegenüberliegenden Seite, umfassend alle Schritte des Verfahrens nach den Ansprüchen 1 bis 7 zuzüglich des Schrittes (400) des Aufbringens des Reibmaterialblocks (5) auf den Träger (2).

## Revendications

**1.** Procédé pour ancrer un élément de feuille de recouvrement (6) à une surface (7) d'un support métallique (2) pour un élément de freinage (1) en collant l'élément de feuille de recouvrement à ladite surface, comportant l'étape consistant à prétraiter ladite surface (7) avant l'étape de collage ; dans lequel

i. l'étape de prétraitement de ladite surface (7) consiste à appliquer sur ladite surface un composé d'apprêt ; **caractérisé en ce que**
ii. le composé d'apprêt consiste en un organo-titanate (10) dilué dans un solvant organique.

**2.** Procédé selon la revendication 1, **caractérisé en ce que** l'organo-titanate (10) est un tétra-alcoxy titane (IV) représenté par la formule générale $Ti(OR)_4$, dans lequel R est identique ou différent et est de préférence choisi dans le groupe constitué de : des groupes alkyles non substitués, à chaîne simple ou ramifiée ; des groupes alkyles substitués, à chaîne simple ou ramifiée, dans lequel les substituants sont choisis dans le groupe constitué de : des groupes amino, phosphiliques, éther, hydrocarbonés insaturés.

**3.** Procédé selon la revendication 1 ou 2, **caractérisé en ce que** le solvant organique est un solvant polaire alcoolique.

**4.** Procédé selon la revendication 3, **caractérisé en ce que** le solvant polaire alcoolique est choisi parmi le groupe constitué de : l'alcool isopropylique, l'éthanol, l'acétone, leurs mélanges.

**5.** Procédé selon l'une quelconque des revendications précédentes, **caractérisé en ce qu'**il comprend les étapes suivantes :

a) peindre (100) ladite surface avec une résine époxy (9) ;
b) appliquer (200) sur ladite surface (7) déjà peinte avec la résine époxy (9) ledit organo-titanate (10) dans un solvant organique pour former sur ladite surface et au-dessus de ladite résine époxy une couche uniforme d'organo-titanate (10) en solution ;
c) coller (300) ledit élément de feuille de recouvrement (6) sur ladite surface (7) déjà peinte et prétraitée avec ledit organo-titanate (10) dilué dans un solvant organique en appliquant entre l'élément de feuille de recouvrement (6) et ladite couche uniforme d'organo-titanate (10) en solution une colle acrylique ou un adhésif à base de résine acrylique (8).

**6.** Procédé selon l'une quelconque des revendications précédentes,
**caractérisé en ce que** ledit élément de feuille de recouvrement consiste en une cale anti-bruit (6) et **en ce que** ledit support métallique consiste en une plaque arrière (2) d'une plaquette de frein de véhicule (1), ladite surface (7)

délimitant une première face (3) de la plaque arrière (2) opposée à une deuxième face (4) de celle-ci portant un bloc de matériau de friction (5) ; ledit organo-titanate (10) étant dilué dans un solvant polaire alcoolique avec une dilution de 0,5 % à 5 % v/v.

**7.** Procédé selon l'une quelconque des revendications précédentes,
**caractérisé en ce que** ledit organo-titanate (10) dilué dans un solvant organique est appliqué sur ladite surface (7) selon une technique choisie dans le groupe consistant à :

- pulvériser la solution d'organo-titanate,
- appliquer au moyen d'un rouleau enduit de la solution d'organo-titanate,
- déposer de manière irrégulière la solution d'organo-titanate sur ladite surface, puis la répartir uniformément à l'aide d'un chiffon ou d'un applicateur recouvert d'un chiffon.

**8.** Élément de freinage (1), en particulier plaquette de frein, comprenant un support (2) pour un bloc de matériau de friction (5) et une cale anti-bruit (6) appliquée sur le support du côté opposé au bloc de matériau de friction, dans lequel la cale (6) est liée à une première face (3) du support opposée audit bloc de matériau de friction, **caractérisé en ce que**, en combinaison :

i) - ladite première face (3) du support est peinte avec une première couche d'une résine époxy (9) ;
ii) - sur ladite première couche de résine époxy (9) est étalée une deuxième couche d'un organo-titanate (10), l'organo-titanate comportant des groupes alcoxy ;
iii) - la cale (6) est liée à ladite première face (3) au moyen d'une troisième couche d'une résine acrylique (8) reposant sur la deuxième couche d'organo-titanate (10) ;
iv) - dans lequel au moins une partie des groupes alcoxy respectifs ont été hydrolysés à la fois par la résine acrylique et la résine époxy (9, 8) formant une liaison chimique (11) entre la première et la troisième couche.

**9.** Élément de freinage selon la revendication 8, **caractérisé en ce que** l'organo-titanate (10) formant la deuxième couche est un tétra-alcoxy titane (IV) représenté par la formule générale $Ti(OR)_4$, dans lequel R est identique ou différent et est de préférence choisi parmi le groupe constitué de :
des groupes alkyles non substitués, à chaîne simple ou ramifiées ; des groupes alkyles substitués, à chaînes simples ou ramifiées, dans lequel les substituants sont choisis dans le groupe constitué de : des groupes amino, phosphiliques, éther, hydrocarbonés insaturés.

**10.** Utilisation d'un composé d'apprêt pour favoriser l'adhérence d'un élément de feuille anti-bruit (6) ou d'une cale à une surface (7) d'un support métallique (2) d'un élément de freinage (1), en particulier une plaque arrière d'une plaquette de frein de véhicule, dans laquelle :

- ladite surface (7) est peinte avec une résine époxy (9),
- ladite cale anti-bruit (6) est collée à ladite surface au moyen d'une colle acrylique ou d'un adhésif à base de résine acrylique (8),

**caractérisé en ce que**

i) - le composé d'apprêt est étalé sur la couche de peinture à base de résine époxy (10) recouvrant ladite surface (7) de manière à être intercalé entre la résine époxy (9) et la colle ou l'adhésif à base de résine acrylique (8) ;
ii) - le composé d'apprêt consiste en un organo-titanate (10) dilué dans un solvant organique, de préférence un solvant polaire alcoolique ;
iii) - l'organo-titanate (10) est un tétra-alcoxy titane (IV) représenté par la formule générale $Ti(OR)_4$, dans laquelle R est identique ou différent et est de préférence choisi dans le groupe constitué de : des groupes alkyles non substitués, à chaîne simple ou ramifiée ; des groupes alkyles substitués, à chaîne simple ou ramifiée, dans lequel les substituants sont choisis dans le groupe constitué de : des groupes amino, phosphiliques, éther, hydrocarbonés insaturés.

**11.** Utilisation selon la revendication 10, dans laquelle ledit organo-titanate (10) est dilué dans un solvant polaire alcoolique avec une dilution de 0,5 % à 5 % v/v, puis est appliqué sur ladite surface (7) et laissé sécher à température ambiante.

**12.** Procédé de fabrication d'un élément de freinage (1) comprenant un support (2), un bloc de matériau de friction (5) lié

au support et un élément anti-bruit (6) également lié au support du côté opposé au bloc de matériau de friction, comportant toutes les étapes du procédé des revendications 1 à 7 plus l'étape (400) consistant à mouler sur le support (2) le bloc de matériau de friction (5).

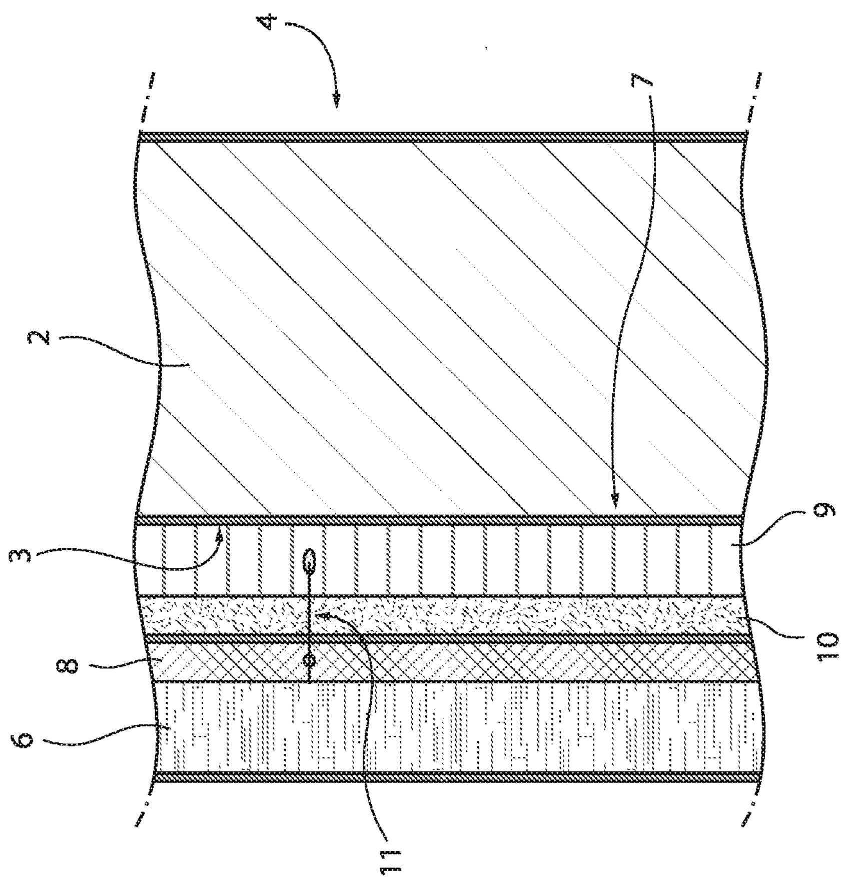


FIG. 2

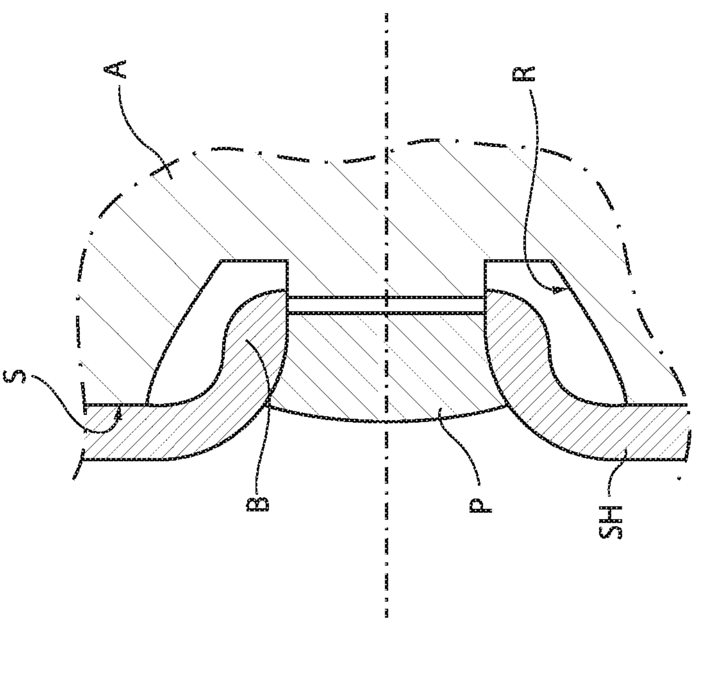


FIG. 1
PRIOR ART

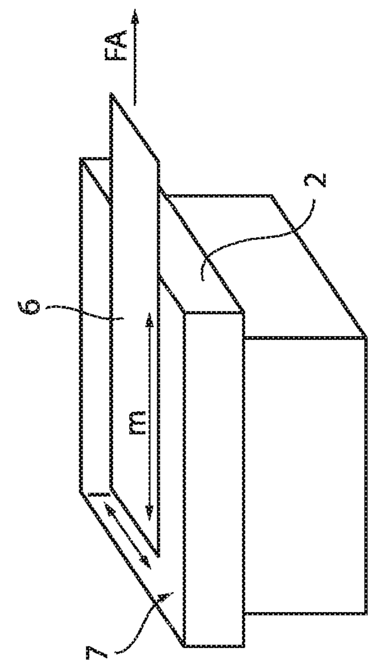


FIG. 4

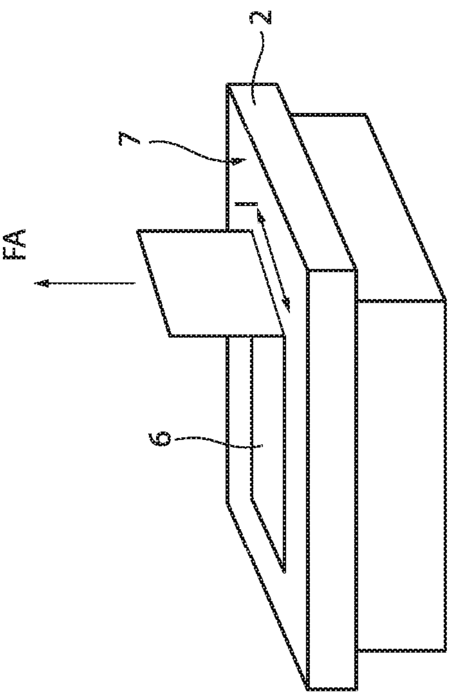


FIG. 3

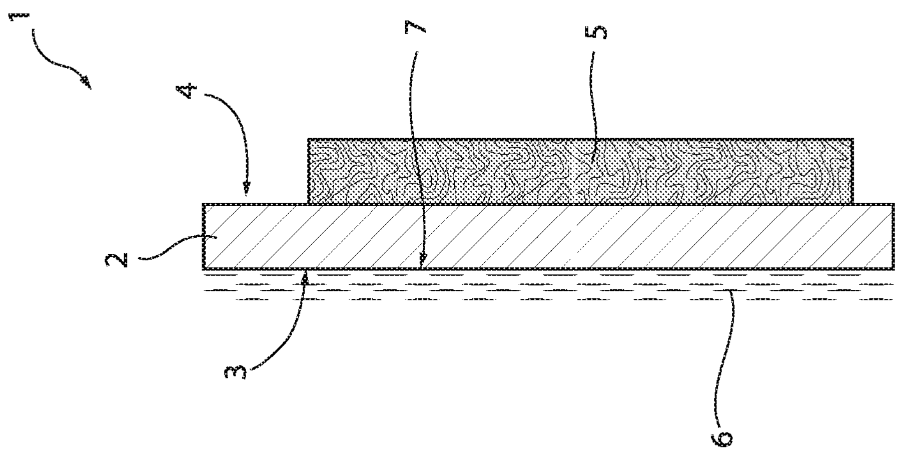


FIG. 6

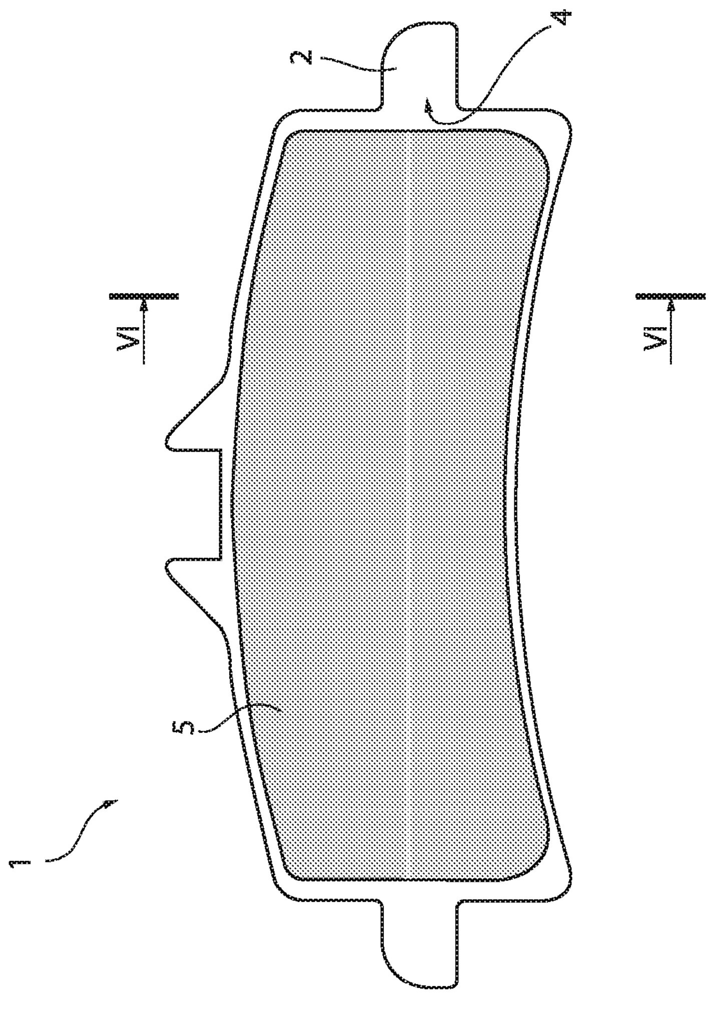


FIG. 5

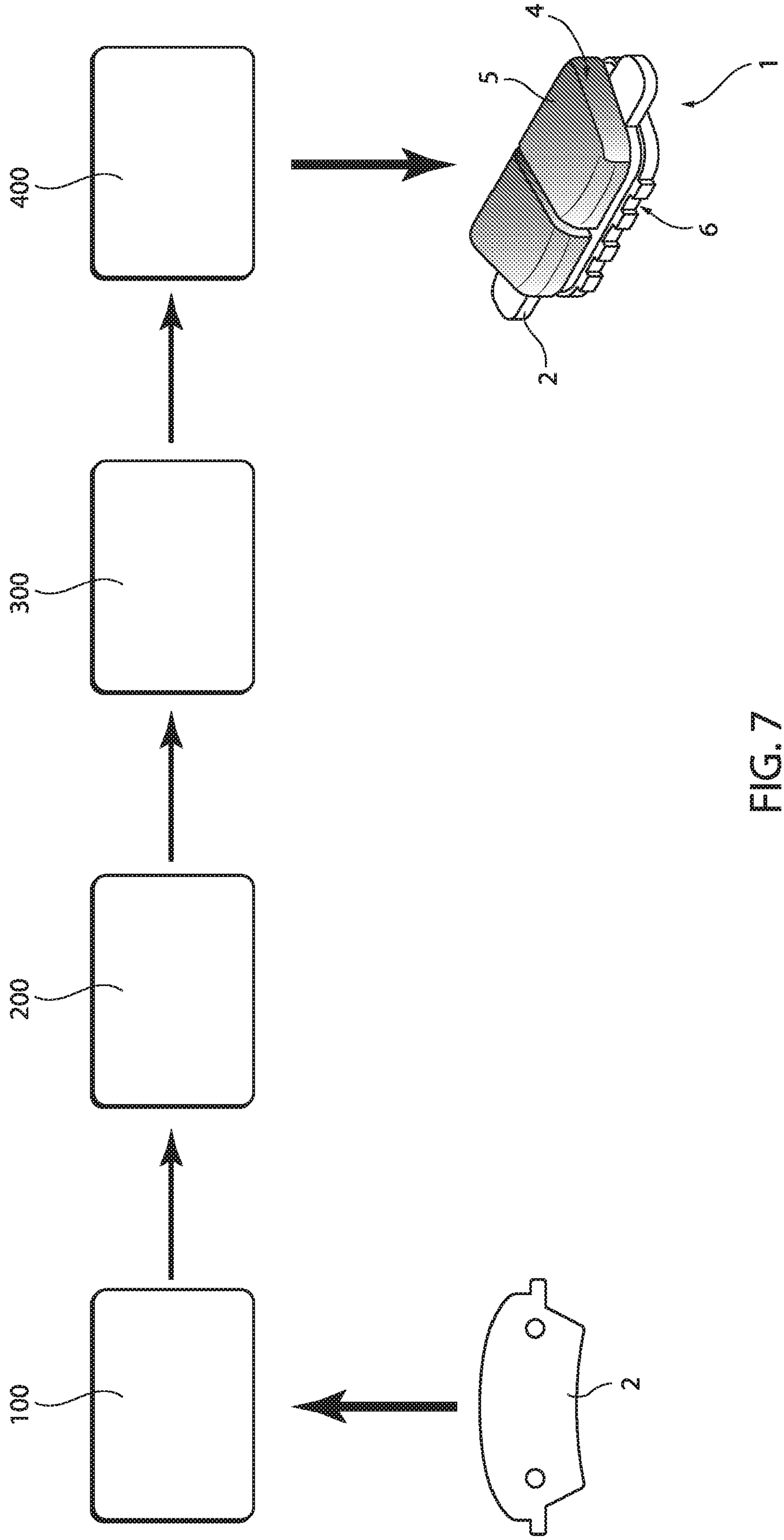


FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- IT 102022000012896
- KR 101947558 B1